(19) **Europäisches Patentamt / European Patent Office / Office européen des brevets**

(11) **EP 1 780 561 B1**

(12) **EUROPEAN PATENT SPECIFICATION**

(45) Date of publication and mention
of the grant of the patent:
**23.05.2012 Bulletin 2012/21**

(51) Int Cl.:
*C09J 133/04* [(2006.01)]  *G02B 5/30* [(2006.01)]
*G02F 1/1335* [(2006.01)]

(21) Application number: **05761817.5**

(22) Date of filing: **22.07.2005**

(86) International application number:
**PCT/JP2005/013486**

(87) International publication number:
**WO 2006/009250 (26.01.2006 Gazette 2006/04)**

(54) **ADHESIVE COMPOSITION FOR POLARIZING PLATE AND POLARIZING PLATE**

HAFTZUSAMMENSETZUNG FÜR EINE POLARISATIONSPLATTE UND POLARISATIONSPLATTE

COMPOSITION ADHÉSIVE POUR PLAQUE DE POLARISATION ET PLAQUE DE POLARISATION

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.07.2004  JP 2004214481**

(43) Date of publication of application:
**02.05.2007  Bulletin 2007/18**

(73) Proprietor: **SOKEN CHEMICAL & ENGINEERING CO. LTD.,**
**Toshima-ku,**
**Tokyo 171-8531 (JP)**

(72) Inventors:
• **TOMITA, Koji,**
**SOKEN CHEM. & ENGINEERING CO., LTD.**
**Sayama-shi,**
**Saitama 350-1320 (JP)**
• **NOMURA, Akira,**
**SOKEN CHEM. & ENGINEERING CO., LTD.**
**Sayama-shi,**
**Saitama 350-1320 (JP)**

(74) Representative: **Kador & Partner**
**Corneliusstrasse 15**
**80469 München (DE)**

(56) References cited:
**JP-A- 10 279 907      JP-A- 2002 173 656**
**JP-A- 2002 249 752      JP-A- 2003 013 029**
**JP-A- 2004 169 023      JP-A- 2005 053 976**

**Description**

TECHNICAL FIELD

The present invention relates to an adhesive composition for a polarizing plate and a polarizing plate. More particularly, the invention relates to an adhesive composition, which is capable of relaxing stress due to dimensional change of a polarizing plate used for a liquid crystal element and is capable of suppressing light leakage and ununiformity of color, and a polarizing plate having a layer composed of the adhesive composition.

BACKGROUND ART

Liquid crystal elements of liquid crystal display devices have a structure in which a liquid crystal component oriented in a given direction is sandwiched between two substrates, and to a surface of the substrate, a polarizing plate or a laminate of a polarizing plate and a retardation film is bonded through an adhesive layer.

Liquid crystal elements are suitable for lightening and thinning display devices, so that in recent years, they have been used for display devices, such as vehicle television set, display of vehicle navigation system, display of computer, wall television set and outdoor measuring instrument, in wide fields. With such uses, the usage environment is becoming extremely severe.

JP 2002 173656 A discloses a pressure-sensitive adhesive sheet having a pressure-sensitive adhesive layer consisting of a pressure-sensitive adhesive composition capable of reducing the total reflection of light at the interface between an optical film or an optical member for a display panel, and the pressure-sensitive adhesive layer. The pressure-sensitive adhesive composition comprises an acrylic polymer containing an aromatic ring-containing copolymerizable monomer as a monomer unit, as an essential component, and can provide a product having 1.49-1.60 refractive index after drying and/or curing.

JP 2003 013029 A discloses a pressure-sensitive adhesive capable of regulating the refractive index of an acrylic pressure-sensitive adhesive layer while maintaining good pressure-sensitive adhesive characteristics of the acrylic pressure-sensitive adhesive layer as much as possible, above all raising the refractive index thereof. The acrylic pressure-sensitive adhesive comprises an acrylic copolymer comprising an alkyl acrylate without containing an aromatic ring and an aromatic ring-containing monomer as at least copolymerization components. The copolymerization ratio of the aromatic ring-containing monomer component is 40-90 wt.% of the whole monomer components.

A polarizing plate (film) used for such a liquid crystal element has a three-layer structure in which a triacetate-based protective film is laminated on both surfaces of a polyvinyl alcohol-based polarizer. Because of properties of these materials, dimensional change of the polarizing plate takes place under the severe usage conditions, and with this dimensional change, foaming and peeling are liable to occur. On that account, there has been made an attempt in which molecular weight or degree of crosslinking of an adhesive used for bonding the polarizing plate to a retardation film or a substrate is increased to enhance durability of the adhesive and thereby improve the polarizing plate so as to endure the severe usage conditions (see for example patent document 1).

Such a method, however, is intended to inhibit dimensional change of the polarizing plate by means of the adhesive, and cannot sufficiently absorb and relax stress attributable to the dimensional change of the polarizing plate occurring under the heat or wet heat conditions. On this account, distribution of residual stress that acts on the polarizing plate becomes heterogeneous, and stress concentration particularly on the outer peripheries is brought about, resulting in a problem that light leakage and ununiformity of color are liable to occur in the liquid crystal display device.

To cope with the above problem, there have been made an attempt in which an additive is added to an adhesive composition to improve ability of an adhesive layer to relax stress due to dimensional change of a polarizing plate and an attempt in which an adhesive composition containing a high-molecular weight polymer and a low-molecular weight polymer is used to absorb and relax stress attributable to dimensional change of a substrate and thereby prevent optical defects occurring under the wet heat conditions (see for example patent document 2).

However, even if the above methods are adopted, it cannot be said that the optical properties and the stress relaxation ability are sufficient. Moreover, because the fields using liquid crystal display devices are expected to be further widened, there has been desired an adhesive composition which is capable of sufficiently absorbing and relaxing stress even if a liquid crystal display device is used under severer conditions to thereby increase dimensional change of a substrate.

Patent document 1: Japanese Patent Laid-Open Publication No. 12471/1991
Patent document 2: Japanese Patent Laid-Open Publication No. 109971/2000

DISCLOSURE OF THE INVENTION

[PROBLEM TO BE SOLVED BY THE INVENTION]

It is an object of the present invention to provide an adhesive composition for a polarizing plate, which has excellent optical properties and durability, is capable of relaxing stress due to dimensional change of a polarizing plate and is capable of suppressing light leakage and ununiformity of color, and a polarizing plate having an adhesive layer composed of the adhesive composition.

[MEANS TO SOLVE THE PROBLEM]

The present inventors have earnestly studied in view of the above problem, and as a result, they have found that an adhesive composition capable of solving the above problem is obtained by adding small amounts of a crosslinking agent and a silane coupling agent to an acrylic copolymer comprising specific monomer components.
That is to say, the adhesive composition for a polarizing plate according to the present invention comprises an acrylic copolymer (A), which comprises, as monomer components, (a1) a (meth)acrylic ester in an amount of 10 to 79.9% by weight, (a2) a benzene ring-containing compound in an amount of 20 to 80% by weight and (a3) a functional group-containing compound in an amount of 0.1 to 10% by weight and has a benzene ring content of not less than 10% by weight and a weight-average molecular weight of 800,000 to 2,000,000, a crosslinking agent (B) in an amount 0.01 to 0.3 part by weight, and a silane coupling agent (C) in an amount of 0.01 to 0.5 part by weight, the amounts of said components (B) and (C) being each based on 100 parts by weight of the acrylic copolymer (A).
The polarizing plate according to the present invention has an adhesive layer composed of the adhesive composition for a polarizing plate, said adhesive layer being formed on at least one surface of the polarizing plate.
The adhesive layer composed of the adhesive composition for a polarizing plate of the invention has a storage elastic modulus (G'1) at 23˚C of not more than $1.0 \times 10^5$ Pa and a storage elastic modulus (G'2) at 80˚C of not more than $5.0 \times 10^4$ Pa.
The ratio of the storage elastic modulus (G'1) to the storage elastic modulus (G'2), (G'1)/(G'2), is preferably more than 1.5 and not more than 5.

[EFFECT OF THE INVENTION]

The adhesive layer composed of the adhesive composition of the invention has excellent optical properties and durability. In addition, the adhesive layer exhibits excellent ability to relax stress due to dimensional change of a polarizing plate and can inhibit occurrence of light leakage, ununiformity of color and peeling under the severe usage conditions, for example, in a high-temperature high-humidity atmosphere.

BEST MODE FOR CARRYING OUT THE INVENTION

The adhesive composition for a polarizing plate according to the invention and the polarizing plate having an adhesive layer composed of the adhesive composition are described in detail hereinafter.

[Adhesive composition for polarizing plate]

The adhesive composition for a polarizing plate according to the invention comprises an acrylic copolymer (A) comprising specific monomer components, a crosslinking agent (B) and a silane coupling agent (C).

<Acrylic copolymer (A)>

(Monomer component)

The acrylic copolymer (A) for use in the invention comprises, as monomer components, a (meth)acrylic ester (a1), a benzene ring-containing compound (a2) that is copolymerizable with the component (a1) and a functional group-containing compound (a3) that is copolymerizable with the component (a1) and/or the component (a2).
Examples of the (meth)acrylic esters (a1) include methyl (meth)acrylate, ethyl (meth)acrylate, propyl (meth) acrylate, n-butyl (meth)acrylate, isobutyl (meth)acrylate, 2-ethylhexyl (meth)acrylate, n-octyl (meth)acrylate, isooctyl (meth)acrylate, lauryl (meth)acrylate, stearyl (meth)acrylate, cyclohexyl (meth)acrylate, methoxyethyl (meth)acrylate and ethoxymethyl (meth)acrylate. These (meth)acrylic esters may be used singly or in combination of two or more kinds.
The benzene ring-containing compound (a2) is preferably a benzene ring-containing (meth)acrylic ester, and examples thereof include benzyl (meth)acrylate, benzyloxyethyl (meth)acrylate, phenoxydiethylene glycol (meth)acrylate, phenoxyethyl (meth)acrylate, ethylene oxide modified cresol (meth)acrylate and ethylene oxide modified nonylphenol (meth)acrylate.

The functional group-containing compound is, for example, a compound having a functional group that undergoes crosslinking reaction with the crosslinking agent (B). Examples of such compounds include carboxyl group-containing compounds, such as (meth)acrylic acid, β-carboxyethyl acrylate, itaconic acid, crotonic acid, maleic acid, fumaric acid and maleic anhydride; hydroxyl group-containing compounds, such as 2-hydroxyethyl (meth)acrylate, 4-hydroxybutyl (meth)acrylate, chloro-2-hydroxypropyl acrylate, diethylene glycol mono(meth)acrylate and allyl alcohol; epoxy group-containing compounds, such as glycidyl (meth)acrylate; amino group-containing compounds, such as aminomethyl (meth)acrylate and dimethylaminoethyl (meth)acrylate; amide group-containing compounds, such as (meth)acrylamide, N-methylol (meth)acrylamide and methoxyethyl (meth)acrylamide; alkoxysilane group-containing compounds, such as methacryloxypropylmethoxysilane; and acetoacetyl group-containing compounds, such as acetoacetoxyethyl (meth)acrylate. These compounds may be used singly or in combination of two or more kinds. Of these, the carboxyl group-containing compounds and the hydroxyl group-containing compounds are preferable.

For the acrylic copolymer (A) for use in the invention, other monomers may be copolymerized within limits not detrimental to the object of the present invention, in addition to the above monomers. Examples of the other monomers include vinyl acetate, styrene, methylstyrene, vinyltoluene and (meth)acrylonitrile.

(Polymerization process)

The acrylic copolymer (A) for use in the invention can be synthesized by a hitherto known polymerization process, such as solution polymerization, emulsion polymerization, suspension polymerization or bulk polymerization.

(Compositional ratio)

The contents of the monomer components in the acrylic copolymer (A) are as follows. Based on the total amount 100% by weight of the monomer components (a1), (a2) and (a3), the content of the component (a1) is in the range of 10 to 79.9% by weight, preferably 25 to 69.9% by weight, particularly preferably 27 to 60.5% by weight, the content of the component (a2) is in the range of 20 to 80% by weight, preferably 30 to 70% by weight, particularly preferably 40 to 60% by weight, and the content of the component (a3) is in the range of 0.1 to 10% by weight, preferably 0.1 to 5% by weight, particularly preferably 0.5 to 3% by weight.

By copolymerizing the monomer components in the above amounts, an adhesive composition having excellent viscoelastic properties is obtained, and occurrence of light leakage and ununiformity of color of a polarizing plate can be inhibited.

The content of the other monomer components is in the range of 0 to 15% by weight, preferably 0 to 10% by weight, determined by the following formula (1').

$$\text{Benzene ring content (wt\%)} = \frac{[\text{Molecular weight of benzene ring}] \times [Y2] \times 100}{[M1] \times [Y1] + [M2] \times [Y2] + [M3] \times [Y3]} \quad \ldots (1')$$

In the formula (1'), M1 is a molecular weight of the monomer component (a1), M2 is a molecular weight of the monomer component (a2), M3 is a molecular weight of the monomer component (a3), Y1 is a content (% by weight) of the monomer component (a1), Y2 is a content (% by weight) of the monomer component (a2), and Y3 is a content (% by weight) of the monomer component (a3). based compound is employable. Of these, the isocyanate-based compound is preferable.

Examples of the isocyanate-based compounds include isocyanate compounds, such as tolylene diisocyanate, chlorophenylene diisocyanate, hexamethylene diisocyanate, tetramethylene diisocyanate, isophorone diisocyanate, xylylene diisocyanate, diphenylmethane diisocyanate and hydrogenated diphenylmethane diisocyanate, isocyanate compounds that are addition products of these isocyanate compounds with trimethylolpropane, isocyanurate compounds, biuret type compounds, and urethane prepolymer type isocyanates obtained by addition reaction with publicly known polyether polyol, polyester polyol, acrylic polyol, polybutadiene polyol, polyisoprene polyol.

Examples of the epoxy-based compounds include ethylene glycol glycidyl ether, polyethylene glycol diglycidyl ether, gly cerol diglycidyl ether, glycerol triglycidyl ether, 1,3-bis(N, N-diglycidylaminomethyl)cyclohexane, N,N,N',N'-tetraglycidyl-m-xylenediamine, N,N,N',N'-tetraglycidylaminophenylmethane, t riglycidyl isocyanurate, m-N,N-diglycidylaminophenylglycidyl ether, N,N-diglycidyltoluidine and N,N-diglycidylaniline.

Examples of the amine-based compounds include hexamethylenediamine, triethyldiamine, polyethyleneimine, hexamethylenetetramine, diethylenetriamine, triethyltetramine, isophronediamine, amino resin and methylene resin.

Example of the metal chelate compounds include compounds wherein polyvalent metals, such as aluminum, iron, copper, zinc, tin, titanium, nickel, antimony, magnesium, vanadium, chromium and zirconium, are coordinated to acetylacetone or ethyl acetoacetate.

Examples of the aziridine-based compounds include diphenylmethane-4,4'-bis(1-aziridinecarboxamide), trimethylolpropane tri-β-aziridinyl propionate, tetramethylolmethane tri-β-aziridinyl propionate, toluene-2,4-bis(1-aziridinecarboxamide), triethylenemelamine, bisisophthaloyl-1-(2-methylaziridine), tris-1-(2-methylaziridine)phosphine and trimethylolpropane tri-β-(2-methylaziridine)propionate.

The crosslinking agent (B) may be used singly or in combination of two or more kinds. The amount of the crosslinking agent (B) added is in the range of 0.01 to 0.3 part by weight, preferably 0.01 to 0.2 part by weight, particularly preferably 0.01 to 0.1 part by weight, based on 100 parts by weight of the acrylic copolymer.

By adding the crosslinking agent (B) in the above amount, an adhesive composition capable of securing the later-described viscoelastic properties, capable of relaxing stress due to dimensional change of a polarizing plate, capable of preventing light leakage and ununiformity of color and having excellent durability can be obtained. If the amount of the crosslinking agent (B) added exceeds the upper limit of the above range, the storage elastic modulus is increased, a function of relaxing stress due to dimensional change of a polarizing plate cannot be sufficiently obtained, and light leakage cannot be improved in some cases. If the amount thereof is less than the lower limit of the above range, durability is not sufficiently obtained in some cases.

<Silane coupling agent (C)>

Examples of the silane coupling agents (C) for use in the invention include polymerizable unsaturated group-containing silicon compounds, such as vinyltrimethoxysilane, vinyltriethoxysilane and methacryloxypropyltrimethoxysilane; silicon compounds having epoxy structure, such as 3-glycidoxypropyltrimethoxysilane, 3-glycidoxypropylmethyldimethoxysilane and 2-(3,4-epoxycyclohexyl)ethyltrimethoxysilane; amino group-containing silane compounds, such as 3-aminopropyltrimethoxysilane, N-(2-aminoethyl)-3-aminopropyltrimethoxysilane and N-(2-aminoethyl)-3-aminopropylmethyldimethoxysilane; and 3-chloropropyltrimethoxysilane.

The silane coupling agent (C) may be used singly or in combination of two or more kinds. The amount of the silane coupling agent (C) added is in the range of 0.01 to 0.5 part by weight, preferably 0.05 to 0.3 part by weight, particularly preferably 0.05 to 0.2 part by weight, based on 100 parts by weight of the acrylic copolymer (A). By adding the silane coupling agent (C) in the above amount, durability required for a polarizing plate can be sufficiently obtained.

<Production process>

The adhesive composition for a polarizing plate of the invention can be produced by mixing the acrylic copolymer (A), the crosslinking agent (B) and the silane coupling agent (C) in the above amounts.

<Additives>

To the adhesive composition of the invention, additives, such as ultraviolet light absorber, antioxidant, antiseptic agent, antifungal agent, tackifier resin, plasticizer, antifoaming agent and wettability controlling agent, may be added within limits not detrimental to transparency, visibility and the effects of the present invention.

[Polarizing plate]

In the polarizing plate of the invention, an adhesive layer composed of the above-mentioned adhesive composition for a polarizing plate is formed on at least one surface of a polarizing plate (polarizing film).

As the polarizing film for use in the invention, a hitherto known polarizing film is employable. For example, there can be used a multilayer film wherein a protective film, such as a cellulose-based film (e.g., cellulose triacetate film), a polycarbonate film or a polyether sulfone-based film, is laminated on a film that is obtained by incorporating a polarizing component such as iodine or a dichroic pigment into a film composed of a polyvinyl alcohol-based resin, such as polyvinyl alcohol, polyvinyl formal, polyvinyl acetal or a saponification product of an ethylene/vinyl acetate copolymer, and stretching the film.

There is no specific limitation on the method to form an adhesive layer on such a polarizing plate (film), and a method comprising directly applying the adhesive composition onto the polarizing plate (film) surface using a bar coater and drying the adhesive composition is adoptable. However, it is preferable to adopt a method comprising temporarily applying the adhesive composition onto a releasable substrate surface, drying the adhesive composition, then transferring the adhesive layer having been formed on the releasable substrate surface onto the polarizing film surface and aging the layer.

The thickness (dry thickness) of the adhesive layer thus formed is in the range of 10 to 100 $\mu$m, preferably 20 to 50 $\mu$m. This adhesive layer has only to be formed on at least one surface of the polarizing plate (film), and therefore, the adhesive layer may be formed on both surfaces of the polarizing plate (film).

The adhesive layer composed of the adhesive composition of the invention has a storage elastic modulus (G'1) at 23°C of not more than $1.0\times10^5$ Pa, preferably $5.0\times10^3$ to $1.0\times10^5$ Pa, particularly preferably $5.0\times10^4$ to $1.0\times10^5$ Pa, and has a storage elastic modulus (G'2) at 80°C of not more than $5.0\times10^4$ Pa, preferably $1.0\times10^3$ to $5.0\times10^4$ Pa, particularly preferably $1.0\times10^4$ to $5.0\times10^4$ Pa. When the storage elastic moduli at 23°C and 80°C are in the above ranges, ability to relax stress due to dimensional change of a polarizing plate under the usage conditions usually supposed is excellent, and therefore, occurrence of light leakage and ununiformity of color can be inhibited even in a high-temperature high-humidity atmosphere.

In the adhesive layer composed of the adhesive composition of the invention, a ratio of the storage elastic modulus (G'1) to the storage elastic modulus (G'2), (G'1)/(G'2), is usually more than 1.5 and not more than 5, preferably more than 1.5 and not more than 4.5, particularly preferably more than 1.5 and not more than 4. When the storage elastic modulus ratio is in the above range, deformation in the temperature range of ordinary temperature to high temperature becomes large, ability to relax stress due to dimensional change is excellent, and occurrence of light leakage and ununiformity of color can be inhibited.

On the polarizing plate (film) of the invention, layers having other functions, such as a protective layer, a reflecting layer and an anti-glare layer, may be laminated.

By bonding the polarizing plate wherein the adhesive layer composed of the adhesive composition of the invention is formed to a substrate, the adhesive layer sufficiently relaxes thermal stress, and therefore, light leakage and ununiformity of color do not occur.

EXAMPLES

The present invention is further described with reference to the following examples. In the following examples, a weight-average molecular weight (Mw) of each polymer in an acrylic polymer solution, in terms of polystyrene, was determined by GPC. The measuring conditions are as follows.

(Measuring conditions)

Apparatus: HLC-8120 manufactured by Tosoh Corporation Column:

G7000HXL (manufactured by Tosoh Corporation): 1 GMHXL (manufactured by Tosoh Corporation): 2 G2500HXL (manufactured by Tosoh Corporation): 1

Sample concentration: diluted to 1.5 mg/ml with tetrahydrofuran
Mobile phase solvent: tetrahydrofuran
Flow rate: 1.0 ml/min
Column temperature: 40°C

<Preparation Example 1>

In a reaction vessel, 69 parts by weight of n-butyl acrylate (n-BA), 30 parts by weight of phenoxydiethylene glycol acrylate, 1 part by weight of 4-hydroxybutyl acrylate (4HBA), 120 parts by weight of ethyl acetate and 0.1 part by weight of azobisisobutyronitrile (AIBN) were placed, and air in the reaction vessel was replaced with a nitrogen gas. Thereafter, the reaction solution was heated to 66°C with stirring in the nitrogen atmosphere, and reaction was performed for 10 hours. After the reaction was completed, the reaction solution was diluted with ethyl acetate to obtain an acrylic polymer solution (1) having a solids content of 20% by weight. The weight-average molecular weight (Mw) of the resulting acrylic copolymer, as determined by GPC, was 1,100,000. The benzene ring content, as determined by the aforesaid formula (1'), was 14% by weight.

<Preparation Example 2>

An acrylic polymer solution (2) having a solids content of 20% by weight was obtained in the same manner as in Preparation Example 1, except that the blending proportions of the monomers were changed to 49 parts by weight of n-BA, 50 parts by weight of phenoxydiethylene glycol acrylate and 1 part by weight of 4HBA. The weight-average molecular weight (Mw) of the resulting acrylic copolymer, as determined by GPC, was 1,100,000. The benzene ring content, as determined by the aforesaid formula (1'), was 20% by weight.

<Preparation Example 3>

An acrylic polymer solution (3) having a solids content of 20% by weight was obtained in the same manner as in Preparation Example 1, except that the types and the blending proportions of the monomers were changed to 49 parts by weight of n-BA, 50 parts by weight of benzyl acrylate and 1 part by weight of 4HBA. The weight-average molecular weight (Mw) of the resulting acrylic copolymer, as determined by GPC, was 1,000,000. The benzene ring content, as determined by the aforesaid formula (1'), was 27% by weight.

<Preparation Example 4>

An acrylic polymer solution (4) having a solids content of 20% by weight was obtained in the same manner as in Preparation Example 1, except that the types and the blending proportions of the monomers were changed to 99 parts by weight of n-BA and 1 part by weight of 4HBA. The weight-average molecular weight (Mw) of the resulting acrylic copolymer, as determined by GPC, was 1,300,000. The benzene ring content was 0% by weight because a benzene ring-containing compound was not used as a monomer component.

<Preparation Example 5>

An acrylic polymer solution (5) having a solids content of 20% by weight was obtained in the same manner as in Preparation Example 1, except that the blending proportions of the monomers were changed to 84 parts by weight of n-BA, 15 parts by weight of phenoxydiethylene glycol acrylate and 1 part by weight of 4HBA. The weight-average molecular weight (Mw) of the resulting acrylic copolymer, as determined by GPC, was 1,100,000. The benzene ring content, as determined by the aforesaid formula (1'), was 8% by weight.

<Preparation Example 6>

An acrylic polymer solution (6) having a solids content of 20% by weight was obtained in the same manner as in Preparation Example 1, except that the types and the blending proportions of the monomers were changed to 49 parts by weight of n-BA, 50 parts by weight of cyclohexyl acrylate and 1 part by weight of 4HBA. The weight-average molecular weight (Mw) of the resulting acrylic copolymer, as determined by GPC, was 1,100,000. The benzene ring content was 0% by weight because a benzene ring-containing compound was not used as a monomer component.

<Preparation Example 7>

An acrylic polymer solution (7) having a solids content of 15% by weight was obtained in the same manner as in Preparation Example 1, except that the blending proportions of the monomers were changed to 49 parts by weight of n-BA, 50 parts by weight of phenoxydiethylene glycol acrylate and 1 part by weight of 4HBA, the amount of ethyl acetate was changed to 80 parts by weight, and the amount of AIBN was changed to 0.05 part by weight. The weight-average molecular weight (Mw) of the resulting acrylic copolymer, as determined by GPC, was 1,800,000. The benzene ring content, as determined by the aforesaid formula (1'), was 20% by weight.

<Preparation Example 8>

An acrylic polymer solution (8) having a solids content of 20% by weight was obtained in the same manner as in Preparation Example 1, except that the blending proportions of the monomers were changed to 49 parts by weight of n-BA, 50 parts by weight of phenoxydiethylene glycol acrylate and 1 part by weight of 4HBA, and the amount of ethyl acetate was changed to 140 parts by weight. The weight-average molecular weight (Mw) of the resulting acrylic copolymer, as determined by GPC, was 850,000. The benzene ring content, as determined by the aforesaid formula (1'), was 20% by weight.

<Preparation Example 9>

An acrylic polymer solution (9) having a solids content of 20% by weight was obtained in the same manner as in Preparation Example 1, except that the types and the blending proportions of the monomers were changed to 49 parts by weight of n-BA, 50 parts by weight of phenoxyethyl acrylate and 1 part by weight of 4HBA. The weight-average molecular weight (Mw) of the resulting acrylic copolymer, as determined by GPC, was 1,000,000. The benzene ring content, as determined by the aforesaid formula (1'), was 27% by weight.

<Preparation Example 10>

An acrylic polymer solution (10) having a solids content of 20% by weight was obtained in the same manner as in Preparation Example 1, except that the types and the blending proportions of the monomers were changed to 49 parts by weight of n-BA, 50 parts by weight of benzyloxyethyl acrylate and 1 part by weight of 4HBA. The weight-average molecular weight (Mw) of the resulting acrylic copolymer, as determined by GPC, was 1,000,000. The benzene ring content, as determined by the aforesaid formula (1'), was 20% by weight.

The compositional ratios, the benzene ring contents and the weight-average molecular weights (Mw) of the acrylic polymer solutions (1) to (10) obtained in Preparation Examples 1 to 10 are set forth in Table 1.

Table 1

| Polymer solution | Composition ratio of polymer (wt%) | | | | | | | Benzene ring content | Mw |
|---|---|---|---|---|---|---|---|---|---|
| | a1 | a2-1 | a2-2 | a2-3 | a2-4 | c | a3 | | |
| (1) | 69 | 30 | - | - | - | - | 1 | 14wt% | 1,100,000 |
| (2) | 49 | 50 | - | - | - | - | 1 | 20wt% | 1,100,000 |
| (3) | 49 | - | 50 | - | - | - | 1 | 27wt% | 1,000,000 |
| (4) | 99 | - | - | - | - | - | 1 | 0 | 1,300,000 |
| (5) | 84 | 15 | - | - | - | - | 1 | 8wt% | 1,100,000 |
| (6) | 49 | - | - | - | - | 50 | 1 | 0 | 1,100,000 |
| (7) | 49 | 50 | - | - | - | - | 1 | 20wt% | 1,800,000 |
| (8) | 49 | 50 | - | - | - | - | 1 | 20wt% | 850,000 |
| (9) | 49 | - | - | 50 | - | - | 1 | 27wt% | 1,000,000 |
| (10) | 49 | - | - | - | 50 | - | 1 | 20wt% | 1,000,000 |

a1 : n-Ba
a2-1 : phenoxydiethylene glycol acrylate
a2-2 : benzyl acrylate
a2-3 : phenoxyethyl acrylate
a2-4 : benzyloxyethyl acrylate
a3 : 4HBA
c : cyclohexyl acrylate

Example 1

To 100 parts by weight of the solids in the acrylic polymer solution (1) obtained in Preparation Example 1, 0.1 part by weight of an isocyanate-based crosslinking agent ("Colonate L" available from Nippon Polyurethane Industry Co., Ltd.) and 0.1 part by weight of a silane coupling agent ("KBN-402" available from Shin-Etsu Polymer Co., Ltd.) were added, and they were sufficiently mixed to obtain an adhesive composition for a polarizing plate. The compositional ratio of the adhesive resin composition is set forth in Table 2.

The resulting adhesive composition was applied onto a PET film having been subjected to silicon release treatment and then dried at 90°C for 3 minutes to evaporate the solvent, whereby an adhesive layer of 25 μm was formed. Then, the PET film having the adhesive layer thus formed was laminated onto a polarizing plate, and they were aged for 7 days under the conditions of a temperature of 23°C and a humidity of 65% to prepare a sample for evaluation.

Examples 2 to 7, Comparative Examples 1 to 7

Adhesive compositions were prepared in the same manner as in Example 1, except that the blending proportions of the components of the adhesive composition were changed as shown in Table 2. Using the adhesive compositions, samples for evaluation were prepared in the same manner as in Example 1.

Table 2

| | Acrylic polymer (A) | | | Crosslinking agent (B) | Silane coupling agent (C) |
|---|---|---|---|---|---|
| | Solution | Benzene ring content | Part(s) by weight | Part(s) by weight | Part(s) by weight |
| Ex. 1 | (1) | 14wt% | 100 | 0.1 | 0.1 |
| Ex.2 | (2) | 20wt% | 100 | 0.1 | 0.1 |
| Ex.3 | (3) | 27wt% | 100 | 0.1 | 0.1 |
| Ex.4 | (7) | 20wt% | 100 | 0.1 | 0.1 |
| Ex. 5 | (8) | 20wt% | 100 | 0.1 | 0.1 |
| Ex. 6 | (9) | 27wt% | 100 | 0.1 | 0.1 |
| Ex. 7 | (10) | 20wt% | 100 | 0.1 | 0.1 |
| Comp. Ex. 1 | (4) | 0 | 100 | 0.1 | 0.1 |
| Comp. Ex. 2 | (5) | 8wt% | 100 | 0.1 | 0.1 |
| Comp. Ex. 3 | (6) | 0 | 100 | 0.1 | 0.1 |
| Comp. Ex. 4 | (2) | 20wt% | 100 | 0 | 0.1 |
| Comp. Ex. 5 | (2) | 20wt% | 100 | 0.8 | 0.1 |
| Comp. Ex. 6 | (2) | 20wt% | 100 | 0.1 | 0 |
| Comp. Ex. 7 | (2) | 20wt% | 100 | 0.1 | 0.8 |

Evaluation

The samples for evaluation obtained in Examples 1 to 7 and Comparative Examples 1 to 7 were evaluated in the following manner. The evaluation results are set forth in Table 3.

<Durability>

The resulting sample for evaluation was allowed to stand for 500 hours under the conditions of 85˚C and 60˚C/95%RH. Then, peeling of the film, foaming on the adhesive interface, etc. were visually observed. A state where there is no problem in practical use is taken as "○", a state where there is a little problem in practical use is taken as "Δ", and a state where there is a problem in practical use is taken as "×"

<Light leakage>

The resulting sample for evaluation was allowed to stand for 72 hours under the conditions of 85˚C, and light leakage caused by residual stress due to dimensional change was visually observed. A state where there is no problem in practical use is taken as "○", a state where there is a little problem in practical use is taken as "Δ", and a state where there is a problem in practical use is taken as "×".

<Storage elastic modulus>

Storage elastic moduli (frequency: 10 Hz) of the resulting sample for evaluation at temperatures of 23˚C and 80˚C were measured by the use of "Physica MCR300" manufactured by Anton Paar.

Table 3

| | Durability | | Light leakage | Storage elastic modulus (Pa) | | |
|---|---|---|---|---|---|---|
| | 85˚C | 60˚C/95% | | 23˚C (G'1) | 80˚C (G'2) | G'1/G'2 |
| Ex. 1 | ○ | ○ | ○~△ | $7.7 \times 10^4$ | $4.3 \times 10^4$ | 1.79 |
| Ex.2 | ○ | ○ | ○ | $7.5 \times 10^4$ | $2.0 \times 10^4$ | 3.75 |
| Ex.3 | ○ | ○ | ○ | $9.0 \times 10^4$ | $4.5 \times 10^4$ | 2.00 |
| Ex. 4 | ○ | ○ | ○ | $8.0 \times 10^4$ | $2.9 \times 10^4$ | 2.75 |
| Ex. 5 | ○ | ○ | ○ | $2.7 \times 10^4$ | $1.2 \times 10^4$ | 2.25 |
| Ex. 6 | ○ | ○ | ○ | $8.0 \times 10^4$ | $2.2 \times 10^4$ | 2.32 |
| Ex. 7 | ○ | ○ | ○ | $8.0 \times 10^4$ | $3.0 \times 10^4$ | 2.67 |
| Comp. Ex. 1 | ○ | ○ | × | $5.1 \times 10^5$ | $0.9 \times 10^4$ | 1.33 |
| Comp. Ex. 2 | ○ | ○ | △ | $8.4 \times 10^4$ | $1.0 \times 10^5$ | 0.84 |
| Comp. Ex: 3 | ○ | ○ | × | $1.4 \times 10^5$ | $6.8 \times 10^4$ | 2.06 |
| Comp. Ex. 4 | × | △ | ○ | $1.8 \times 10^4$ | $7.2 \times 10^3$ | 2.50 |
| Comp. Ex. 5 | △ | △ | × | $5.5 \times 10^5$ | $3.0 \times 10^5$ | 1.83 |
| Comp. Ex. 6 | × | × | ○ | $6.5 \times 10^4$ | $3.3 \times 10^4$ | 1.97 |
| Comp. Ex. 7 | △ | △ | ○ | $7.0 \times 10^4$ | $1.8 \times 10^4$ | 3.89 |

As shown in Table 2, the adhesive compositions of the invention (Examples 1 to 7) were excellent in durability and prevention of light leakage. On the other hand, the adhesive compositions (Comparative Examples 1 and 3) comprising an acrylic polymer containing no benzene ring-containing compound suffered occurrence of light leakage. Also the adhesive composition (Comparative Example 2) comprising an acrylic polymer having a low benzene ring content and the adhesive composition (Comparative Example 5) containing a large amount of a crosslinking agent did not exert a sufficient effect of preventing light leakage. The reason is presumably that the storage elastic moduli of the adhesive layer at 23˚C and/or 80˚C were high. The adhesive composition (Comparative Example 4) containing no crosslinking agent and the adhesive composition (Comparative Example 6) containing no silane coupling agent did not have sufficient durability.

## Claims

1.   An adhesive composition for a polarizing plate, comprising:

an acrylic copolymer (A) which comprises, as monomer components, (a1) a (meth)acrylic ester in an amount of 10 to 79.9% by weight, (a2) a benzene ring-containing compound in an amount of 20 to 80% by weight and (a3) a functional group-containing compound in an amount of 0.1 to 10% by weight and has a benzene ring content of not less than 10% by weight determined by the following formula (1').

$$\text{Benzene ring content (wt\%)} = \frac{[\text{Molecular weight of benzene ring}] \times [Y2] \times 100}{[M1] \times [Y1] + [M2] \times [Y2] + [M3] \times [Y3]} \quad \ldots (1')$$

In the formula (1'), M1 is a molecular weight of the monomer component (a1), M2 is a molecular weight of the monomer component (a2), M3 is a molecular weight of the monomer component (a3), Y1 is a content (% by weight) of the monomer component (a1), Y2 is a content (% by weight) of the monomer component (a2), and Y3 is a content (% by weight) of the monomer component (a3) and a weight-average molecular weight of 800,000 to 2,000,000 determined by a gel permeation chromatography,
a crosslinking agent (B) in an amount 0.01 to 0.3 part by weight, and
a silane coupling agent (C) in an amount of 0.01 to 0.5 part by weight,
the amounts of said components (B) and (C) being each based on 100 parts by weight of the acrylic copolymer (A).

2. The adhesive composition for a polarizing plate as claimed in claim 1, wherein the benzene ring-containing compound (a2) is at least one compound selected from the group consisting of phenoxydiethylene glycol acrylate, phenoxyethyl acrylate, benzyl acrylate and benzyloxyethyl acrylate.

3. A polarizing plate having an adhesive layer composed of the adhesive composition for a polarizing plate of claim 1 or 2, said adhesive layer being formed on at least one surface of the polarizing plate.

4. The polarizing plate as claimed in claim 3, wherein the adhesive layer has a storage elastic modulus (G'1) at 23˚C of not more than $1.0 \times 10^5$ Pa and a storage elastic modulus (G'2) at 80˚C of not more than $5.0 \times 10^4$ Pa.

5. The polarizing plate as claimed in claim 4, wherein a ratio of the storage elastic modulus (G'1) to the storage elastic modulus (G'2), (G'1)/(G'2), is more than 1.5 and not more than 5.

**Patentansprüche**

1. Haftzusammensetzung für eine Polarisationsplatte, die folgendes aufweist:

ein Acrylcopolymer (A), das als Monomerkomponenten folgendes umfaßt: (a1) einen (Meth)acrylester in einer Menge von 10 bis 79,9 Gew.-%, (a2) eine einen Benzolring enthaltende Verbindung in einer Menge von 20 bis 80 Gew.-% und (a3) eine eine funktionelle Gruppe enthaltende Verbindung in einer Menge von 0,1 bis 10 Gew.-%, und das einen Gehalt an Benzolringen von nicht weniger als 10 Gew.-% aufweist, der nach der folgenden Formel bestimmt wird:

$$\text{Benzolring-gehalt (Gew.-\%)} = \frac{[\text{Molekulargewicht des Benzolrings}] \times [Y2] \times 100}{[M1] \times [Y1] + [M2] \times [Y2] + [M3] \times [Y3]} \qquad (1')$$

wobei in der Formel (1')
M1 das Molekulargewicht der Monomerkomponente (a1) ist,
M2 das Molekulargewicht der Monomerkomponente (a2) ist,
M3 das Molekulargewicht der Monomerkomponente (a3) ist,
Y1 der Gehalt (Gew.-%) der Monomerkomponente (a1) ist,
Y2 der Gehalt (Gew.-%) der Monomerkomponente (a2) ist und Y3 der Gehalt (Gew.-%) der Monomerkomponente (a3) ist;
und ein Gewichtsmittel des Molekulargewichts von 800.000 bis 2.000.000 hat, und zwar durch Gel-Permeationschromatographie bestimmt;
ein Vernetzungsmittel (B) in einer Menge von 0,01 bis 0,3 Gew.-Teilen und
ein Silankopplungsmittel (C) in einer Menge von 0,01 bis 0,5 Gew.-Teilen,
wobei die Mengen der Komponenten (B) und (C) jeweils auf 100 Gew.-Teile der Acrylcopolymers (A) bezogen sind.

2. Haftzusammensetzung für eine Polarisationsplatte nach Anspruch 1, wobei die einen Benzolring enthaltende Verbindung (a2) zumindest eine Verbindung ist, die aus der Gruppe ausgewählt ist, die aus Phenoxydiethylenglycolacrylat, Phenoxyethylacrylat, Benzylacrylat und Benzyloxyethylacrylat besteht.

3. Polarisationsplatte mit einer Haftschicht, die aus der Haftzusammensetzung für eine Polarisationsplatte nach Anspruch 1 oder 2 aufgebaut ist, wobei die Haftschicht auf zumindest einer Oberfläche der Polarisationsplatte ausgebildet ist.

4. Polarisationsplatte nach Anspruch 3, wobei die Haftschicht einen Speicherelastizitätsmodul (G'1) bei 23°C von nicht mehr als $1{,}0 \times 10^5$ Pa und einen Speicherelastizitätsmodul (G'2) bei 80°C von nicht mehr als $5{,}0 \times 10^4$ Pa aufweist.

5. Polarisationsplatte nach Anspruch 4, wobei das Verhältnis zwischen dem Speicherelastizitätsmodul (G'1) und dem Speicherelastizitätsmodul (G'2), (G'1)/(G'2), mehr als 1,5 und nicht mehr als 5 beträgt.


**Revendications**

1. Composition adhésive pour une plaque de polarisation, comprenant :

   un copolymère acrylique (A) qui comprend, en tant que composants monomères, (a1) un ester (méth)acrylique en une quantité de 10 à 79,9 % en poids, (a2) un composé contenant un cycle benzénique en une quantité de 20 à 80 % en poids et (a3) un composé contenant un groupe fonctionnel en une quantité de 0,1 à 10 % en poids, et a une teneur en cycle benzénique de pas moins de 10 % en poids déterminée par la formule suivante (1')

   $$\text{Teneur en cycle benzénique (\% en poids)} = \frac{[\text{Poids moléculaire de cycle benzénique}] \times [Y2] \times 100}{[M1] \times [Y1] + [M2] \times [Y2] + [M3] \times [Y3]} \quad \ldots (1')$$

   Dans la formule (1'), M1 est un poids moléculaire du composant monomère (a1), M2 est un poids moléculaire du composant monomère (a2), M3 est un poids moléculaire du composant monomère (a3), Y1 est une teneur (% en poids) du composant monomère (a1), Y2 est une teneur (% en poids) du composant monomère (a2), et Y3 est une teneur (% en poids) du composant monomère (a3)
   et un poids moléculaire moyen en poids de 800 000 à 2 000 000 déterminé par chromatographie par perméation de gel,
   un agent de réticulation (B) en une quantité de 0,01 à 0,3 partie en poids, et un agent de couplage silane (C) en une quantité de 0,01 à 0,5 partie en poids,
   les quantités desdits composants (B) et (C) partant chacune d'une base de 100 parties en poids du copolymère acrylique (A).

2. Composition adhésive pour une plaque de polarisation selon la revendication 1, dans laquelle le composé contenant un cycle benzénique (a2) est au moins un composé choisi dans le groupe constitué de l'acrylate de phénoxydiéthylène-glycol, l'acrylate de phénoxyéthyle, l'acrylate de benzyle et l'acrylate de benzyloxyéthyle.

3. Plaque de polarisation ayant une couche adhésive composée de la composition adhésive pour une plaque de polarisation de la revendication 1 ou 2, ladite couche adhésive étant formée sur au moins une surface de la plaque de polarisation.

4. Plaque de polarisation selon la revendication 3, dans laquelle la couche adhésive a un module d'élasticité de conservation (G'1) à 23 °C de pas plus de $1{,}0 \times 10^5$ Pa et un module d'élasticité de conservation (G'2) à 80 °C de pas plus de $5{,}0 \times 10^4$ Pa.

5. Plaque de polarisation selon la revendication 4, dans laquelle le rapport du module d'élasticité de conservation (G'1) sur le module d'élasticité de conservation (G'2), (G'1)/(G'2), est supérieur à 1,5 et pas supérieur à 5.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002173656 A
- JP 2003013029 A
- JP 3012471 A
- JP 2000109971 A